Europäisches Patentamt

European Patent Office

Office européen des brevets

(11) Publication number: **0 056 307**
**B1**

(12) **EUROPEAN PATENT SPECIFICATION**

(45) Date of publication of patent specification: **24.04.85**

(51) Int. Cl.⁴: **H 04 N 9/31**, H 04 N 9/28

(21) Application number: **82300073.2**

(22) Date of filing: **07.01.82**

(54) **Optical focus adjustment means for projection television apparatus.**

(30) Priority: **08.01.81 JP 1718/81**

(43) Date of publication of application:
**21.07.82 Bulletin 82/29**

(45) Publication of the grant of the patent:
**24.04.85 Bulletin 85/17**

(84) Designated Contracting States:
**DE FR GB**

(56) References cited:
**US-A-3 048 654**
**US-A-4 151 554**

(73) Proprietor: **Matsushita Electric Industrial Co., Ltd.**
**1006, Oaza Kadoma**
**Kadoma-shi Osaka-fu, 571 (JP)**

(72) Inventor: **Miyatake, Yoshito**
**5-103 Toda-cho**
**Moriguchi-shi Osaka-fu (JP)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

EP 0 056 307 B1

## Description

The present invention relates to a projection television apparatus, and more particularly, to a focus adjustment means for projection television.

In order to provide a large picture, many types of projection television apparatuses have been proposed. A projection television apparatus that comprises three mono-chromatic cathode-ray tubes, two dichroic mirrors and a lens, has been previously proposed, for example in U.S. Patent No. 4,151,554.

Its basic construction will be described below:

Three cathode-ray tubes which display red, green and blue images, respectively are placed in the same plane so as to form the letter "T", with their faceplates facing each other and forming three sides of a parallelepipedal space. Two dichroic mirrors are disposed in the space and cross at right angles to each other. The lens is placed on the axis of the centre cathode-ray tube. Red, green and blue images from three cathode-ray tubes are combined into the colour image by the two dichroic mirrors, and the resulting colour image is enlarged and projected on to the screen by a single lens.

It is necessary for the projected image of each colour to be adjusted individually for focus ("focus" described here is not the focus of the electron gun beam in a cathode-ray tube but that of a projecting lens exclusively). The customary way is to slide the lens along its optical axis in order to focus roughly, and to slide each cathode-ray tube along its optical axis in order to finely focus each individual colour. In this case a mechanism for focus adjustment is necessary so that each cathode-ray tube can be slid along its optical axis when focus adjustment is carried out, and can be fixed there after focussing is finished. But such a mechanism becomes a very large-scale thing because cathode-ray tubes are heavy and large. This mechanism, additionally, has the problem that there is a danger of receiving an electric shock since the focus adjustment is carried out with the cathode-ray tubes driven at a high voltage (about 30 kV in general).

It is an object of the present invention to provide a projection television apparatus having a focus adjustment means by which focus adjustment is carried out easily and safely using a simple mechanism.

The present invention provides a projection television apparatus comprising: three cathode-ray tubes of red, green and blue, respectively which are placed relative to each other to form the letter "T", with their faceplates close to each other and facing each other so that said cathode-ray tubes of red and blue are placed substantially on the same axis and on either side of said cathode-ray tube of green, a mirror block which comprises a red-type dichroic mirror and a blue-type dichroic mirror reflecting exclusively red light and blue light, respectively and intersecting to form the letter "X", and which is placed in the parallelepipedal space formed by said faceplates, and a lens which is placed on the optical axis of said cathode-ray tube of green, characterised in that the lens is movable along the optical axis for focussing the green projected image on a screen, in that the mirror block is movable in a plane parallel to the plane of the red-type dichroic mirror for focussing the blue projected image on the screen and in a plane parallel to the blue-type dichroic mirror for focussing the red projected image on the screen, and in that means are provided for adjusting the positions and the sizes of the images on the cathode ray tubes so that the images of the respective colours are superimposed on each other in correct registration on the screen.

Features and advantages of the present invention will appear more fully hereinafter from a consideration of the following description of an embodiment thereof when taken in connection with the accompanying drawings in which:

Figure 1 is a schematic plan view of the main portion of a projection television apparatus in accordance with the present invention;

Figure 2 is a schematic side view thereof, parts being broken away;

Figures 3a and 3b are schematic diagrams of assistance in explaining the operation of the present invention;

Figure 4 is an exploded perspective view of one embodiment of the focus adjustment means;

Figure 5 is an exploded perspective view of another embodiment of the focus adjustment means;

Figure 6 shows a partially cut away perspective view of the bottom of a focus adjustment means in a more general form embodying the present invention; and

Figure 7 shows a partially cut away perspective view of the construction of a mirror block for use with the present invention.

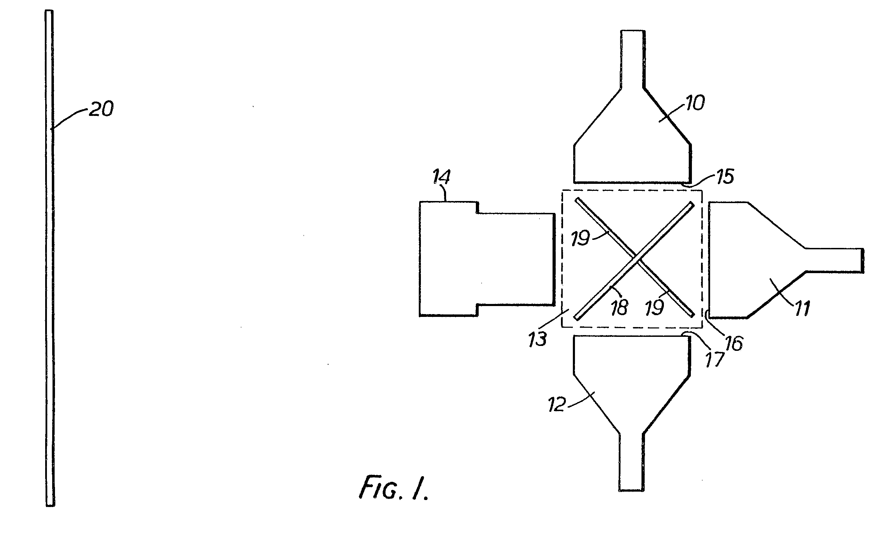

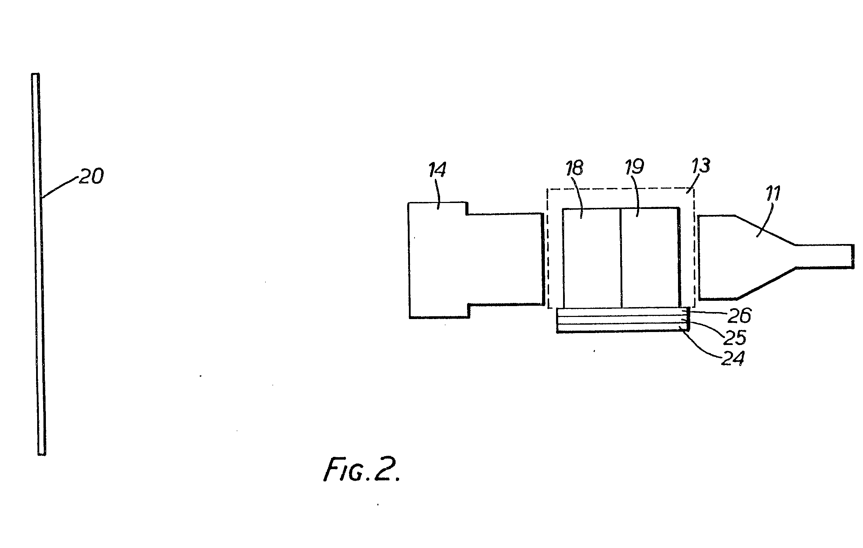

Figure 1 and Figure 2 show the main portion of a projection television apparatus according to the present invention. Figure 1 is a schematic plan view while Figure 2 is a schematic side view with parts removed for clarity. As shown, the main portion comprises three monochromatic cathode-ray tubes 10, 11 and 12, a mirror block 13 and a lens 14. The three cathode-ray tubes 10, 11 and 12 display red, green and blue images, respectively. The red cathode-ray tube 10 and the blue cathode-ray tube 12 are placed in the same plane and on either side of the green cathode-ray tube 11 to form the letter "T", with their faceplates 15, 16 and 17 close to each other and roughly facing each other and forming three sides of a parallelepipedal space. The mirror block 13 consists of two dichroic mirrors 18 and 19, intersecting at right angles to each other to form the letter "X". One dichroic mirror 18 is a red-type dichroic mirror which reflects red light but transmits green and blue light. The other dichroic mirror 19 is a blue-type dichroic mirror that reflects blue light but transmits red and green light. The mirror block 13 is placed in the parallelepipedal space. The lens 14 is placed on the axis of the green cathode-ray tube 11 and constitutes the fourth side of the parallelepipedal space enclosing the mirror block 13. Every angle between any normal of any dichroic mirror and the optical axis of any cathode-ray tube is 45°. Employing such apparatus as shown in Figure 1 and Figure 2, the red, green and blue images from three cathode-ray tubes 10, 11 and 12 are combined into the colour image by the dichroic mirrors 18 and 19, and the resulting colour image is enlarged and projected onto a screen 20 by the lens 14.

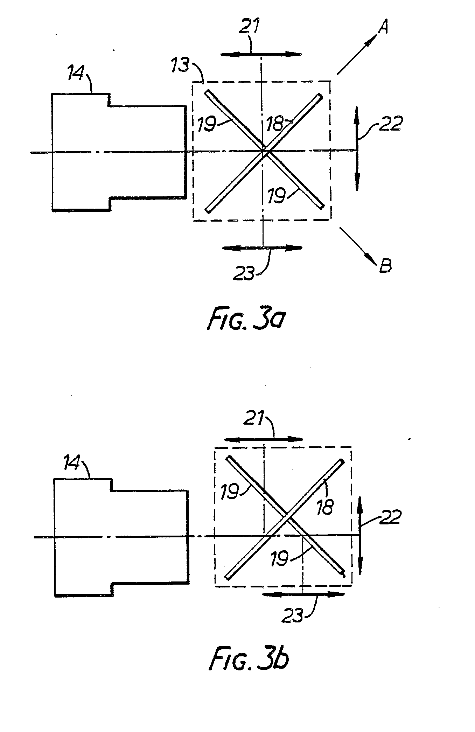

The principle of the focus adjustment means according to the present invention will be described below. Figure 3a shows the standard position of the mirror block 13 associated with the lens 14, and the optimum image positions 21, 22 and 23 (designated by arrows) of the cathode-ray tubes 10, 11 and 12, respectively so that the projected image of each colour is in best focus and superimposed on the other colour images on the screen 20. Regarding the projected image of each colour on the screen 20 as an object, the optimum image positions 21, 22 and 23 can be regarded as the positions where real images of associated objects are focused. If the mirror block 13 were moved in a direction indicated by the arrow A in Figure 3a along the plane of the red-type dichroic mirror 18 to the position shown in Figure 3b, the green optimum image position 22 would not move, irrespective of the displacement of the mirror block 13, because green light proceeds straight through both dichroic mirrors 18 and 19. The red optimum image position 21 would not move either, because the reflective surface of the red-type dichroic mirror 18 does not move irrespective of the displacement of the mirror block 13. However, the blue optimum image position 23 does move, because the reflective surface of the blue-type dichroic mirror 19 moves in accordance with the displacement of the mirror block 13. The displacement distance of the blue optimum image position 23 is twice the displacement distance of the mirror block 13, and the displacement direction of the blue optimum image position 23 is parallel to the displacement direction of the mirror block 13. Therefore, if the mirror block 13 is moved in the direction A, the blue optimum image position 23 is changed without changing the red and green optimum image positions 21 and 22. And when the blue optimum image position is on the fluorescent surface of the blue cathode-ray tube 12, the blue projected image on the screen 20 is in best focus. This implies that the focus of the blue projected image exclusively may be adjusted by changing the position of the mirror block 13 instead of changing the position of the blue cathode-ray tube 12. The focus of the red projected image exclusively may be adjusted by changing the position of the mirror block 13 only in a direction as indicated by the arrow B shown in Figure 3a. The focus of the green projected image is adjustable by moving the lens 14 along its optical axis. The green focus adjustment should be carried out before the red and blue focus adjustments.

When the focus adjustments of the red and blue projected images are carried out, the projected images shift sidewards on the screen 20, and their sizes change. However, these problems are solved easily by adjusting positions and sizes of the images displayed on the cathode-ray tubes 10, 11 and 12 with adjusting deflection circuits. In general, the faceplate of a cathode-ray tube for use in projection television apparatuses is a parallel plane or a shape like a parallel plane. Hence the focus of the projected image is scarcely changed all over the screen 20, even if the image on the cathode-ray tube is shifted sidewards on it. But it is necessary for the mirror block 13 to be moved without rotation, because if not, it becomes impossible to adjust the focus of the peripheral area of the projected image on the screen 20.

The sequence of focus adjustment according to the present invention will be described below.

(I) Slide the lens 14 along its optical axis so that the green projected image on the screen 20 is in best focus.

(II) Move the mirror block 13 along the plane of the red-type dichroic mirror 18 so that the blue projected image on the screen 20 is in best focus.

(III) Move the mirror block 13 along the plane of the blue-type dichroic mirror 19 so that the red projected image on the screen 20 is in best focus.

(IV) Adjust the positions and the sizes of the images on the cathode-ray tubes 10, 11 and 12 so that the images of respective colours are superimposed on each other on the screen 20.

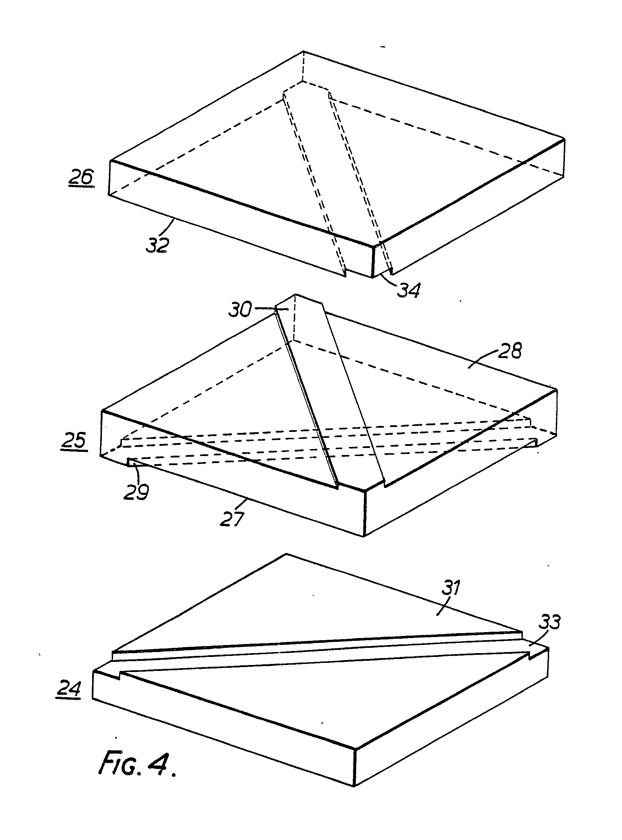

Figure 4 shows one embodiment of a mechanism which enables the parallel displacement of the mirror block 13. This Figure is an exploded perspective view of a support for the mirror block 13 as shown in Figure 2. A base section 24 of the support and three cathode-ray tubes 10, 11 and 12 are fixed with respect to one another. A centre section 25 of the support is placed on the base section 24, and an upper section 26 is placed on the centre section 25. These three sections 24, 25 and 26 are shaped like regular squares, and placed so that three sides of each board are adjacent and parallel to the faceplates 15, 16 and 17, respectively. The mirror block 13 is fixed on the upper section 26. Both the bottom surface 27 and the top surface 28 of the centre section 25 are provided with straight protuberances 29 and 30 along opposite diagonals. The top surface 31 of the base section 24 and the bottom surface 32 of the upper section 26 are provided with straight grooves 33 and 34. The protuberance 29 fits in the groove 33 and hence the centre section 25 can move in only one direction with respect to the base section 24. Also, the protuberance 30 fits in the groove 34 and hence the upper section 26 can move in only one direction with respect to the centre section 25. Therefore the upper section 26 can move in two directions at right angles to each other with respect to the base section without rotation i.e. while maintaining its sides parallel with the sides of the base section 24. The centre section 25 and the upper section 26 are moved when the focus adjustment is carried out, and three sections 24, 25 and 26 can be fixed to each other with screws after the adjustment is finished. As the protuberance 29 and the groove 33 are in register with the blue-type dichroic mirror 19, moving the mirror block 13 with the upper section 26 and fixing the centre section 25 enables a focus adjustment of the red projected image. Also, as both the protuberance 30 and the groove 34 are in register with the red-type dichroic mirror 18, moving the mirror block 13 with the centre section 25 and fixing the base section 24 enables a focus adjustment of the blue projected image. It is possible to alter the example shown in Figure 4 by exchanging grooves for the protuberances on the centre section 25 and protuberances for the grooves in the sections 24 and 26 to provide the same function.

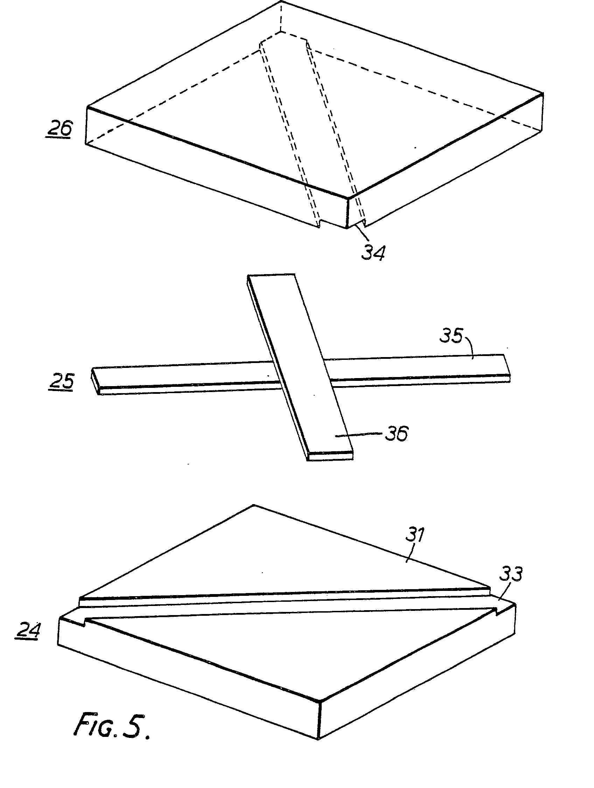

Figure 5 shows another embodiment of a focussing support according to the present invention. The construction in Figure 5 is similar to that in Figure 4 except for the centre section. The centre section 25 here consists of two boards 35 and 36 which are fixed to each other and intersect at right angles. The centre section 25 fits in both the groove 33 of the base section 24 and the groove 34 of the upper section 26. Therefore the upper section 26 can move exclusively parallel to the base section 24 without rotation, and such function is similar to the preceding embodiment.

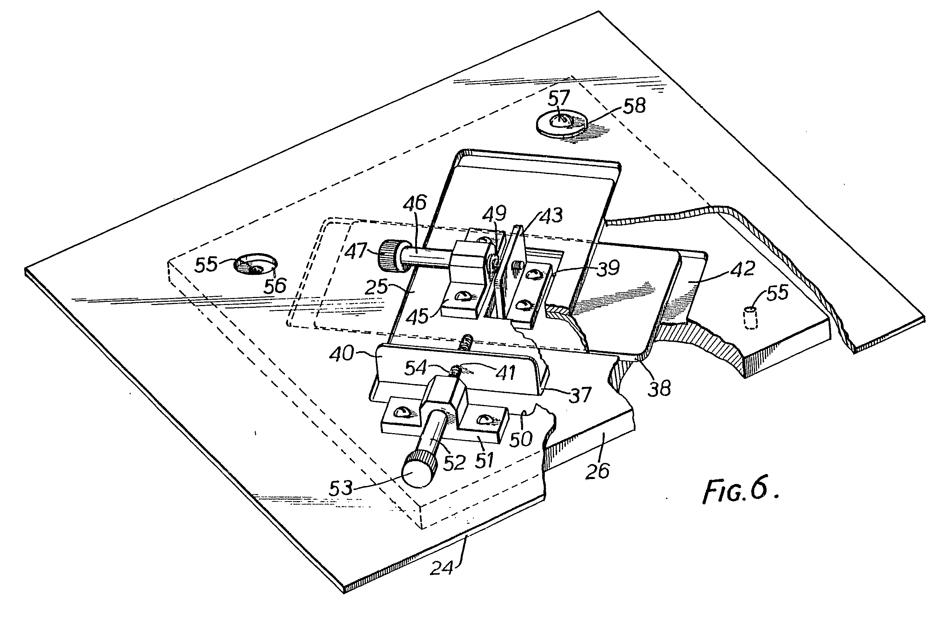

Figure 6 shows a practical embodiment according to the present invention in a more general form. This Figure is a partial cut away view in perspective of the focus adjustment support but upside down.

The centre section 25 consists of a first plate 37 and a second plate 38, both of which are made of rectangular metal plates and fixed to intersect at right angles, and each has an aperture 39. An edge 40 of the first plate 35 is bent at right angles and has a screw threaded hole 41. The upper section 26 is made of square plastics member and has a rectangular hollow 42, whose depth is slightly deeper than the thickness of the second plate 38. The second plate 38 fits in the hollow 42 and can slide therein. A small metal plate 43 which is bent to form the letter "L" and provided with a screw threaded hole 44, is fixed on the upper section 26 and projects through the apertures 39 of plates 37 and 38. A bearing 45 is fixed on the plate 37 of the centre section 25. A shaft 46, which has a knob 47 at one end and a screw thread 48 at the other end, passes through the bearing 45. A circlip 49 is put on the shaft 46 to prevent axial movement of the shaft 46. The screw 48 co-operates with screw-threaded hole 44. Rotating the knob 47 enables the upper section 26 to slide along the second plate 38. The base section 24 is a metal plate and has an aperture 50, within which the plate 37 of the centre section 25 fits and can slide. A bearing 51 is fixed on the base section 24. A shaft 52, which has a knob 53 at one end and a screw thread 54 at the other end, passes through the bearing 51. A circlip is put on the shaft 52 to prevent axial movement of the shaft 52. The screw 54 co-operates with the screw-threaded hole 41. Rotating the knob 53 enables the plate 37 to slide in the aperture 50. By the mechanism described above rotating the knobs 47 and 53 enables the upper section 26 to slide without rotation with respect to the base section 24. Rotating one of the two knobs 47 and 53 enables the upper section 25 to slide in a direction along one of the two diagonals of the square of the upper section 26. The upper section 26 has screw-threaded holes 55, and the base section 24 has holes 56 whose diameters are larger than the diameter of holes 55 and each of which encompasses a hole 55. A screw 56 is passed through a washer 58 and located in a hole 55. The focus adjustment is carried out with the screws 57 loose. After adjustment, the screws 57 may be tightened and hence the upper section 26 may be fixed to the base section 24.

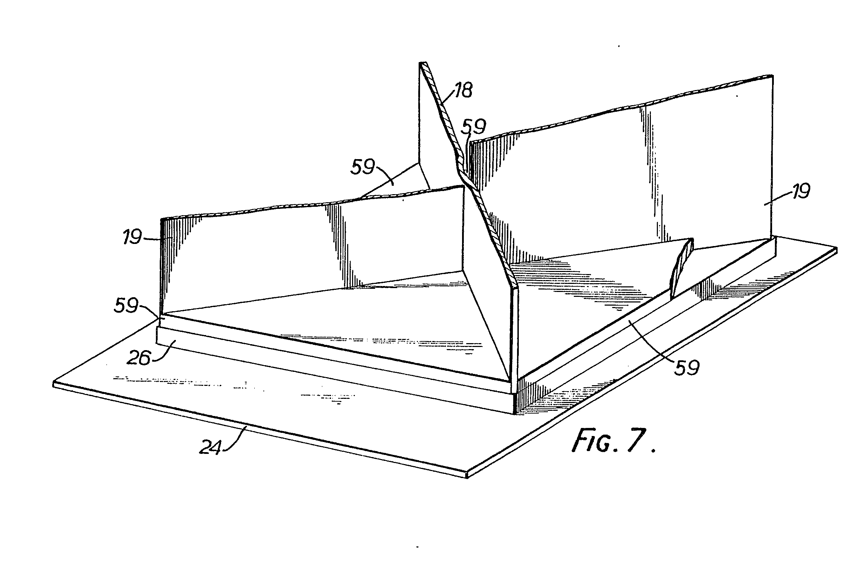

Figure 7 shows the construction of the mirror block 13. Four triangular plates 59 which are made to form rectangular equilateral triangles are placed on the upper section 26 with gaps between each other. The red-type dichroic mirror 18 and the blue-type dichroic mirror 19 are placed on the upper section 26 with their ends pinched in the gaps between the triangular plates 59 and fixed therein by a binding agent. The blue-type dichroic mirror 19 is split in two. The red-type dichroic mirror 18 and the blue-type dichroic mirror 19 are along each diagonal of the square of the upper section 26. The cathode-ray tubes 10, 11 and 12 are fixed on the base section 24.

As described above, the present invention provides a projection television apparatus having a focus adjustment support for the mirrors 18, 19 by which focus adjustment is carried out easily and safely.

## Claims

1. A projection television apparatus comprising: three cathode-ray tubes (10, 11, 12) of red, green and blue, respectively which are placed relative to each other to form the letter "T", with their faceplates (15, 16, 17) close to each other and facing each other so that said cathode-ray tubes (10, 12) of red and blue are placed substantially on the same axis and on either side of said cathode-ray tube (11) of green, a mirror block (13) which comprises a red-type dichroic mirror (18) and a blue-type dichroic mirror (19) reflecting exclusively red light and blue light, respectively and intersecting to form the letter "X", and which is placed in the parallelepipedal space formed by said faceplates, and a lens (14) which is placed on the optical axis of said cathode-ray tube of green, characterised in that the lens (14) is movable along the optical axis for focussing the green projected image on a screen, in that the mirror block (13) is movable in a plane parallel to the plane of the red-type dichroic mirror (18) for focussing the blue projected image on the screen and in a plane parallel to the blue-type dichroic mirror (19) for focussing the red projected image on the screen, and in that means are provided for adjusting the positions and the sizes of the images on the cathode ray tubes (10, 11, 12) so that the images of the respective colours are superimposed on each other in correct registration on the screen.

2. A projection television apparatus as claimed in claim 1, wherein said mirror block (13) is movable without changing any angle between a normal of said dichroic mirrors (18, 19) and an optical axis of said cathode-ray tubes.

3. A projection television apparatus as claimed in claim 1 or 2, wherein a base section (24) is placed at the bottom of said parallelepipedal space between the faceplates, a centre section (25) is placed on said base section, an upper section (26) is placed on said centre section, and said mirror block (13) is fixed on said upper section, said base section and said centre section having a co-operating protuberance (29) and groove (33) on their touching surfaces, and said centre section and said upper section having a co-operating protuberance (30) and groove (34) on their touching surfaces.

4. A projection television apparatus as claimed in claim 3, wherein said centre section (25) can slide over said base section (24) in a direction parallel to the plane of one of said dichroic mirrors (18, 19) and said upper section (26) can slide over said centre section (25) in a direction parallel to the plane of the other of said dichroic mirrors.

5. A projection television apparatus as claimed in claim 4, wherein said centre section (25) consists of two strips (35, 36) which are fixed to each other to form the letter "X", and said base section (24) and upper section (26) have grooves (50, 42) for receiving said strips.

## Revendications

1. Appareil de télévision à projection comrenant: trois tubes à rayons cathodiques (10, 11, 12) respectivement pour le rouge, le vert et le bleu, qui sont placés, les uns par rapport aux autres, de manière à former la lettre "T", leurs plaques faciales (15, 16, 17) étant mutuellement proches et étant tournées les unes vers les autres de manière que les tubes à rayons cathodiques (10, 12) pour le rouge et le bleu soient placés sur le même axe et de part de d'autre dudit tube à rayons cathodiques (11) pour le vert, un bloc de miroirs (13) qui comprend un miroir dichroïque de type rogge (18) et un miroir dichroïque de type bleu (19) réfléchissant respectivement la seule lumière rouge et la seule lumière bleue et se coupant de manière à former la lettre "X", et qui est placé dans l'espace parallélépipédique formé par lesdites plaques faciales, et un objectif (14) qui est placé sur l'axe optique dudit tube à rayons cathodiques pour le vert, caractérisé en ce que l'objectif (14) peut être déplacé le long de l'axe optique pour effectuer la mise au point de l'image projetée verte sur un écran, en ce que le bloc de miroirs (13) peut être déplacé dans un plan parallèle au plan du miroir dichroïque de type rouge (18) pour effectuer la mise au point de l'image projetée bleue sur l'écran et dans un plan parallèle au miroir dichroïque de type bleu (19) pour effectuer la mise au point de l'image projetée rouge sur l'écran, et en ce que des moyens sont prévus pour ajuster les positions et les dimensions des images sur les tubes à rayons cathodiques (10, 11, 12) de façon que les images des couleurs respectives se superposent les unes aux autres en concordance correcte sur l'écran.

2. Appareil de télévision à projection selon la revendication 1, où ledit bloc de miroirs (13) peut être déplacé sans que soit modifié aucun angle entre une perpendiculaire auxdits miroirs dichroïques (18, 19) et un axe optique desdits tubes à rayons cathodiques.

3. Appareil de télévision à projection selon la revendication 1 ou 2 où une section de base (24) est placée au fond de l'espace parallélépipédique formé entre les plaques faciales, une section centrale (25) est placée sur ladite section de base, une section supérieure (26) est placée sur ladite section centrale, et ledit bloc de miroirs (13) est fixé sur ladite section supérieure, ladite section de base et ladite section centrale possédant une partie saillante (29) et une rainure (33) coopérante sur leurs surfaces se touchant, et ladite section centrale et ladite section supérieure possèdant une partie saillante (30) et une rainure (34) coopérante sur leurs surfaces se touchant.

4. Appareil de télévision à projection selon la revendication 3, où ladite section centrale (25) peut coulisser sur ladite section de base (24) suivant une direction parallèle au plan de l'un desdits miroirs dichroïques (18, 19), et ladite section supérieure (26) peut coulisser sur ladite section centrale (25) suivant une direction parallèle au plan de l'autre desdits miroirs dichroïques.

5. Appareil de télévision à projection selon la revendication 4, où ladite section centrale (25) est constituée de deux bandes (35, 36) qui sont fixes l'une par rapport à l'autre de manière à former la lettre "X", et lesdites section de base (24) et section supérieure (26) possèdent des rainures (50, 42) destinées à recevoir lesdites bandes.

## Patentansprüche

1. Fernsehprojektionsgerät, enthaltend: drei Kathodenstrahlröhren (10, 11, 12) für Rot, Grün bzw. Blau, die zueinander so angeordnet sind, daß sie den Buchstaben "T" bilden, ihre Frontscheiben (15, 16, 17) einander dicht benachbart und einander derart zugewandt sind, daß die Kathodenstrahlröhren (10, 12) für Rot und Blau auf einer gemeinsamen Achse und zu beiden Seiten der Kathodenstrahlröhre (11) für Grün angeordnet sind, einen Spiegelblock (13), der einen rot-dichroitischen Spiegel (18) und einen blau-dichroitischen Spiegel (19) enthält, die nur rotes bzw. blaues Licht reflektieren und sich in Form des Buchstabens "X" schneiden, und der in dem rechteckigen Raum angeordnet ist, der von den genannten Frontplatten gebildet wird, und eine Linse (14), die in der optischen Achse der Kathodenstrahlröhre für Grün angeordnet ist, dadurch gekennzeichnet, daß die Linse (14) längs der optischen Achse für die Fokussierung des grünen Projektionsbildes auf einen Schirm beweglich ist, daß der Spiegelblock (13) in einer Ebene parallel zur Ebene des rot-dichroitischen Spiegels (18) für die Fokussierung des blauen Projektionsbildes auf den Schirm und in einer Ebene parallel zum blau-dichroitischen Spiegel (19) zur Fokussierung des roten Projektionsbildes auf den Schirm beweglich ist, und daß Einrichtungen zum Justieren der Lage und der Größe der Bilder auf den Kathodenstrahlröhren (10, 11, 12) vorgesehen sind, so daß die Bilder der entsprechenden Farben auf der Projektionswand im korrekten Raster übereinander liegen.

2. Fernsehprojektionsgerät nach Anspruch 1, bei dem der Spiegelblock (13) beweglich ist, ohne jeglichen Winkel zwischen einer Senkrechten auf die dichroitischen Spiegel (18, 19) und einer optischen Achse der genannten Kathodenstrahlröhren zu verändern.

3. Fernsehprojektionsgerät nach Anspruch 1 oder 2, bei dem ein unteres Tragstück (24) auf dem Boden des rechteckigen Raumes zwischen den Frontscheiben angeordnet ist, auf dem unteren Tragstück ein mittleres Tragstück (25) liegt, auf dem mittleren Tragstück ein oberes Tragstück (26) angeordnet ist und daß der genannte Spiegelblock (13) auf dem oberen Tragstück befestigt ist, daß das untere Tragstück und das mittlere Tragstück an ihren einander berührenden Flächen eine zusammenwirkende Vorsprungs- und Rillenanordnung (29, 33) aufweisen und daß das mittlere Tragstück und das obere Tragstück an ihren einander berührenden Flächen eine zusammenwirkende Vorsprungs- und Rillenanordnung (30, 34) aufweisen.

4. Fernsehprojektionsgerät nach Anspruch 3, bei dem das mittlere Tragstück (25) auf dem unteren Tragstück (24) in einer Richtung parallel zur Ebene des einen der dichroitischen Spiegel (18, 19) gleiten kann und daß das obere Tragstück (26) auf dem mittleren Tragstück (25) in einer Richtung parallel zur Ebene des anderen der dichroitischen Spiegel gleiten kann.

5. Fernsehprojektionsgerät nach Anspruch 4, bei dem das mittlere Tragstück (25) aus zwei Streifen (35, 36) besteht, die aneinander so befestigt sind, daß sie den Buchstaben "X" bilden, und daß das untere Tragstück (24) und das obere Tragstück (26) Rillen (50, 42) zur Aufnahme der genannten Streifen aufweisen.

FIG. 1.

0 056 307

FIG.2.

0 056 307

FIG. 3a

FIG. 3b

FIG. 4.

4

Fig. 5.

FIG.6.

0 056 307

FIG. 7.

0 056 307